# EUROPÄISCHE PATENTSCHRIFT

(11) **EP 2 644 927 B1**
(45) Veröffentlichungstag und Bekanntmachung des Hinweises auf die Patenterteilung: **03.02.2016**
(21) Anmeldenummer: 13160526.3
(22) Anmeldetag: 22.03.2013
(51) Int. Cl.: F16D 55/226, F16D 65/18

(54) **Scheibenbremse für ein Nutzfahrzeug**
Disc brake for a commercial vehicle
Frein à disque pour un véhicule utilitaire

(30) Priorität: 26.03.2012 DE 102012006093
(43) Veröffentlichungstag der Anmeldung: 02.10.2013
(73) Patentinhaber: KNORR-BREMSE Systeme für Nutzfahrzeuge GmbH, 80809 München (DE)
(72) Erfinder: Fischl, Tobias, 94474 Vilshofen (DE); Werth, Alexander, 80999 München (DE)
(74) Vertreter: Schönmann, Kurt

(56) Entgegenhaltungen:
- WO-A1-03/023244
- DE-U1- 9 206 052
- DE-U1- 9 208 699
- US-A1- 2011 247 905

## Beschreibung

Die Erfindung betrifft eine Scheibenbremse für ein Nutzfahrzeug gemäß dem Oberbegriff des Anspruchs 1.

Der Bremssattel einer solchen Scheibenbremse dient zum einen der Lagerung von Funktionsteilen, die zum Betrieb der Scheibenbremse erforderlich sind, und zum anderen der Aufnahme von Kräften, wie sie beim Bremsen auftreten.

Zu den Funktionsteilen zählt u.a. eine Zuspanneinrichtung, die in einer Aufnahmekammer des Bremssattels angeordnet ist und die einen sich einerseits an einer Innenwandung des Bremssattels und andererseits an einer Traverse abstützenden schwenkbaren Bremshebel aufweist, sowie mindestens einen, bei einer Bremsung an einen Bremsbelag anpressbaren Bremsstempel, der in der Traverse gelagert ist. Bestandteil der Zuspanneinrichtung ist weiterhin eine Nachstelleinrichtung, mit der ein sich verschleißbedingt veränderndes Lüftspiel, also des Abstands zwischen dem Bremsstempel und dem Bremsbelag, ausgeglichen wird.

An der Traverse stützt sich eine Druckfeder ebenso ab wie an einer Verschlussplatte, die eine Öffnung der Aufnahmekammer auf der dem zugeordneten Bremsbelag zugewandten Seite verschließt. Dabei ist der oder sind, vorzugsweise zwei parallel und abständig zueinander angeordnete Bremsstempel durch die Verschlussplatte geführt, die mit dem Bremssattel üblicherweise verschraubt ist.

Der von einem pneumatisch betätigten Stößel oder elektromechanisch verschwenkbare Bremshebel wird von einem Hebeldom überdeckt, der Bestandteil des Bremssattels ist und der die Aufnahmekammer überwölbt.

Bei Betätigung der Bremse, also einem Verschwenken des Bremshebels, wird die Traverse und werden damit die Bremsstempel gegen den Bremsbelag und in der Folge dieser gegen die Bremsscheibe gepresst, woraufhin bei einem als Schiebesattel ausgebildeten Bremssattel aufgrund der auftretenden Reaktionskräfte der Bremssattel unter Mitnahme eines reaktionsseitigen Bremsbelages in Richtung der Bremsscheibe verfährt, bis beide Bremsbeläge bremsend an der Bremsscheibe anliegen.

Der Bremssattel muss daher eine ausreichende Festigkeit aufweisen, um die auftretenden Kräfte aufnehmen zu können. Hierzu ist der bekannte Bremssattel einstückig als Gussteil ausgebildet und entsprechend dimensioniert.

Allerdings ist die Herstellung des Bremssattels relativ aufwändig, vor allem weil die für die Unterbringung der Zuspanneinrichtung notwendige Aufnahmekammer sowie der sich daran anschließende Hebeldom ausgeformt werden müssen, was gießtechnisch sehr anspruchsvoll ist.

Die Hauptbelastungsbereiche des Bremssattels, d.h., die Kraftangriffspunkte, liegen jedoch außerhalb der Aufnahmekammer, nämlich in dem dem reaktionsseitigen Bremsbelag zugeordneten Sattelrücken, dem gegenüberliegenden Sattelkopf, an dem sich der Bremshebel abstützt, sowie in die beiden Sattelteile miteinander verbindenden Zugstreben.

Alles in allem ist die Herstellung des Bremssattels sehr aufwändig und teuer und steht somit den ständigen Forderungen nach einer Kostenoptimierung entgegen.

Um eine Reduzierung der Herstellungskosten zu erreichen, ist bereits vorgeschlagen worden, den Bremssattel zweiteilig auszubilden und die beiden Teile miteinander zu verschrauben, wobei allerdings beide Teile aus Gusseisen hergestellt sind, so dass sich an der grundsätzlichen Problematik insbesondere hinsichtlich der Ausformung der Aufnahmekammer und des Hebeldoms nichts ändert.

Eine solche zweiteilige Ausbildung des Bremssattels ist aus Figur 5 der WO 03/023244 A1 bekannt.

Die DE 92 08 699 U1 sowie die DE 92 06 052 U1 offenbaren jeweils einen Bremssattel, der gleichfalls mehrteilig ausgebildet ist und bei dem die Aufnahmekammer durch einen außenseitig durch einen eine Montageöffnung verschließenden Deckel verschlossen ist, der den Sattelkopf bildet, an dem sich der Bremshebel abstützt.

In diesem Sinne ist auch eine aus der US 2011/247905 A1 bekannte Scheibenbremse gestaltet, bei der ein die Aufnahmekammer mit angeformtem Hebeldom verschließender Deckel zusätzlich noch einen Flansch zur Befestigung eines Bremszylinders trägt.

Der Erfindung liegt die Aufgabe zugrunde, eine Scheibenbremse der gattungsgemäßen Art so weiterzuentwickeln, dass ihr Bremssattel bei unveränderter Belastbarkeit einfacher und kostengünstiger herstellbar ist.

Diese Aufgabe wird durch eine Scheibenbremse mit den Merkmalen des Anspruchs 1 gelöst.

Diese Ausbildung, insbesondere des Bremssattels, führt gegenüber dem Stand der Technik zu einer ganzen Reihe von Vorteilen.

So ist zu allererst die einfachere und damit kostengünstigere Herstellung zu nennen, da der erfindungsgemäß vorgesehene C-förmige Rahmen, der Bestandteil des Bremssattels ist, gießtechnisch wesentlich einfacher herzustellen ist als dies bislang der Fall war. Dies vor allem deshalb, weil auf die komplizierte Ausformung der Aufnahmekammer und des Hebeldoms verzichtet werden kann, die immer den Einsatz entsprechender Kerne erforderte.

Stattdessen kann das separate Gehäuse, in dem die Zuspanneinrichtung nun positioniert ist und das in Funktion, also bei einer Bremsung, relativ gering belastet wird, mit einfachen Herstellungsverfahren gefertigt werden. Hierzu zählen beispielsweise ein Umformen, wie etwa durch Tiefziehen eines Blechs oder die Herstellung als Gussteil, beispielsweise aus einem Leichtmetall wie Aluminium, einer Aluminiumlegierung oder auch Gusseisen mit entsprechend den Ausführungsvarianten erforderlichen Eigenschaften. Ebenfalls denkbar ist eine Ausführung aus Kunststoff mit entsprechenden Verstärkungskomponenten.

Das Gehäuse ist zur umfänglich geöffneten Seite hin durch einen Anschlussflansch verschlossen, der mit dem Gehäuse fest verbunden ist. Bei entsprechender Materialwahl kann dies stoffschlüssig erfolgen, bevorzugt durch Schweißen. Denkbar ist aber auch, die Verbindung form- oder kraftschlüssig darzustellen, vorzugsweise durch eine Verschraubung.

Diese Baueinheit Gehäuse/Anschlussflansch wird als vormontiertes Modul bereitgestellt, wobei das Gehäuse mit den anliegenden Funktionsteilen konfektioniert werden kann und der Anschlussflansch entsprechend einer geforderten, von dem anzuschließenden Bremszylinder abhängigen Konfiguration und Dimensionierung ausgewählt, am Gehäuse befestigt wird. Insbesondere können verschiedene Flanschwinkel einer zugeordneten Bremszylinderfläche durch separate Anschlussflansche problemlos berücksichtigt werden.

Der Anschlussflansch dient des Weiteren als Widerlager für den Bremshebel und ist außerordentlich einfach zu produzieren.

Nach einer vorteilhaften Weiterbildung der Erfindung sind die Befestigungsbereiche des Anschlussflansches mit dem Rahmen, bezogen auf die Mittelachse einer vom Bremssattel überspannten Bremsscheibe mit geringerem Abstand dazu angeordnet als zugeordnete Lagerstellen, über die der Bremssattel an einem Bremsträger befestigt ist.

Die Befestigung des Anschlussflansches am Rahmen erfolgt vorzugsweise mittels Schrauben, wobei der Anschlussflansch außenseitig an einer Anlagefläche des Rahmens anliegt, und die Schrauben in Gewindebohrungen des Rahmens eingedreht sind.

Eine andere Variante sieht eine Abstützung des Anschlussflansches am Rahmen durch eine formschlüssige Verbindung, z. B. durch eine Anlagefläche zwischen beiden Bauteilen vor, die die in Zuspannrichtung auftretenden Kräfte bei einem Bremsvorgang abstützt.

In jedem Fall erlaubt die Erfindung eine im Wesentlichen auf die unterschiedlichen Belastungsfälle abgestimmte Variation bei der Auswahl der miteinander zu verbindenden Komponenten. Dies betrifft insbesondere die Wahl unterschiedlicher Materialien, die zu einer kostengünstigen Konfiguration in wesentlichem Umfang beitragen, ebenso wie eine angepasste Dimensionierung der einzelnen Komponenten.

Bei einer Verschraubung des Anschlussflansches mit dem Gehäuse besteht die Möglichkeit, beide Teile zu Reparaturzwecken voneinander zu trennen, wenn ein entsprechender Bedarf an der im Gehäuse positionierten Zuspanneinrichtung, einschließlich der Nachstelleinrichtung, besteht.

Eine Kostenreduzierung bei der Herstellung der neuen Scheibenbremse ergibt sich auch daraus, dass sich das Einbringen der Zuspanneinrichtung in das Gehäuse bei einer Vormontage wesentlich einfacher gestaltet als die Montage der Funktionsteile in die angegossene Aufnahmekammer des Bremssattels nach dem Stand der Technik, vor allem aufgrund der beengten Platzverhältnisse.

Darüber hinaus kann auf den Einsatz eines Verschlussdeckels verzichtet werden, da dieser im übertragenen Sinn einstückiger Bestandteil des separaten Gehäuses ist. Notwendige Dichtungsmaßnahmen, wie sie bisher erforderlich waren, können somit gänzlich entfallen.

Ein weiterer, betriebswirtschaftlich bedeutsamer Vorteil liegt darin, dass der Bremssattel insgesamt, also die Einheit Rahmen/Gehäuse/Anschlussflansch ein geringeres Gewicht aufweist als ein Bremssattel, der komplett aus Gusseisen besteht. Damit kommt der neue Bremssattel den Forderungen nach einer gewichtsoptimierten Bauweise, die zu einer Reduzierung des Kraftstoffverbrauchs und damit einer Senkung der Betriebskosten beiträgt, entgegen.

Im Übrigen bleibt die Belastbarkeit des Bremssattels, d.h., die Aufnahme der beim Bremsen auftretenden Kräfte, uneingeschränkt erhalten, da die insoweit belasteten Teile des Rahmens und des Anschlussflansches entsprechend den Anforderungen dimensioniert und gestaltet sind. Im Kraftfluss befinden sich lediglich der Rahmen, die Verbindungselemente sowie der Anschlussflansch, während das Gehäuse in Zuspannrichtung nicht belastet wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Bremssattel einer erfindungsgemäßen Scheibenbremse in einer perspektivischen Vorderansicht
- Figur 2: den Bremssattel in einer perspektivischen Rückansicht
- Figur 3: den Bremssattel in einer Draufsicht
- Figur 4: eine Einzelheit des Bremssattels, gleichfalls schaubildlich dargestellt.

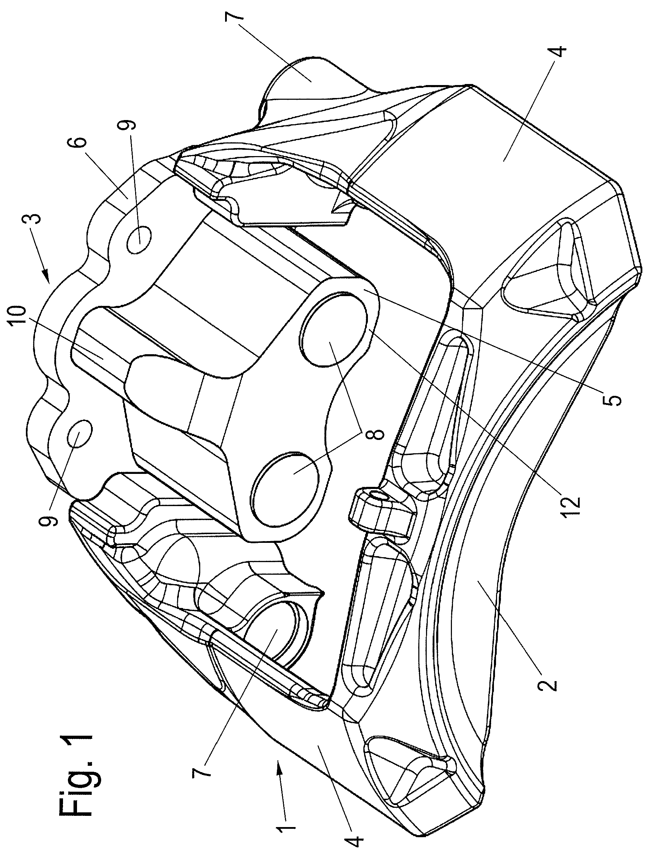

In den Figuren 1-3 ist ein Bremssattel einer Scheibenbremse für ein Nutzfahrzeug dargestellt, der in montierter Stellung eine nicht gezeigte Bremsscheibe übergreift und in dem bei einer Bremsung die Bremsscheibe kontaktierende Bremsbeläge angeordnet sind.

Erfindungsgemäß besteht der Bremssattel aus einem C-förmigen Rahmen 1, einem die offene Seite des C überbrückenden Anschlussflansch 6 sowie einem daran befestigten Gehäuse 5, an dem eine Zuspanneinrichtung sowie eine Nachstelleinrichtung zum Ausgleich einer verschleißbedingten Änderung eines Lüftspiels positioniert sind.

Mithilfe eines im Gehäuse 5 platzierten Bremshebels der Zuspanneinrichtung werden Bremsstempel 8, die das Gehäuse 5 im Bereich eines Bodens 12 durchtreten, bei einer Bremsung an einen Bremsbelag gepresst.

Der Anschlussflansch 6 bildet einen Sattelkopf 3, während die gegenüberliegende Seite des Rahmens 1 einen Sattelrücken 2 darstellt. Beide Teile sind durch parallel und abständig zueinander verlaufende Zugstreben 4 verbunden, die ebenfalls Bestandteil des Rahmens 1 sind.

Das Gehäuse, das einen angeformten Hebeldom 10 aufweist, zur freien Verschwenkbarkeit des darin gelagerten Bremshebels, ist mit dem Anschlussflansch 6 fest verbunden, beispielsweise stoffschlüssig durch Verschweißen. Denkbar ist aber auch eine Schraubverbindung.

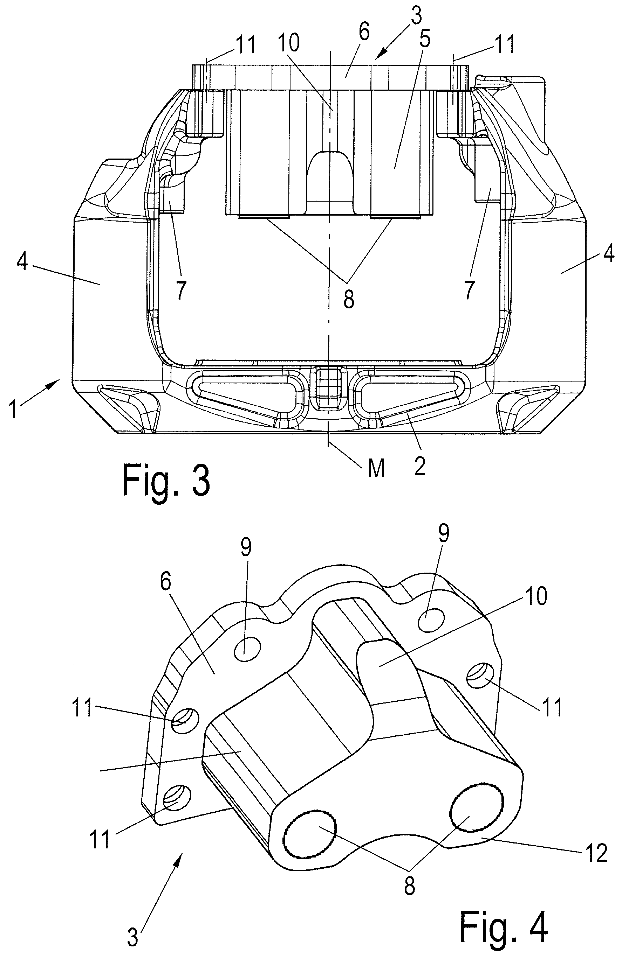

Die so gebildete vormontierte Baueinheit ist in der Figur 4 als Einzelheit dargestellt. Darin ist auch zu erkennen, dass Anschraubbohrungen 9 im Anschlussflansch 6 vorgesehen sind, zur Durchführung von Schrauben, mit denen ein nicht dargestellter Bremszylinder am Anschlussflansch 6 befestigbar ist.

Der Anschlussflansch 6 selbst mit dem angeschlossenen Gehäuse ist am Rahmen 1 gleichfalls durch Schrauben befestigt, wobei in den Darstellungen lediglich Befestigungsbohrungen 11 zur Durchführung der Schrauben erkennbar sind, die in Gewindebohrungen des Rahmens eingedreht sind.

Zur Betätigung des Bremshebels ist im Anschlussflansch 6 eine Durchgangsöffnung 13 vorgesehen, durch die ein beispielsweise pneumatisch betätigter Stößel führbar ist, der bei einer Bremsung am Bremshebel angreift.

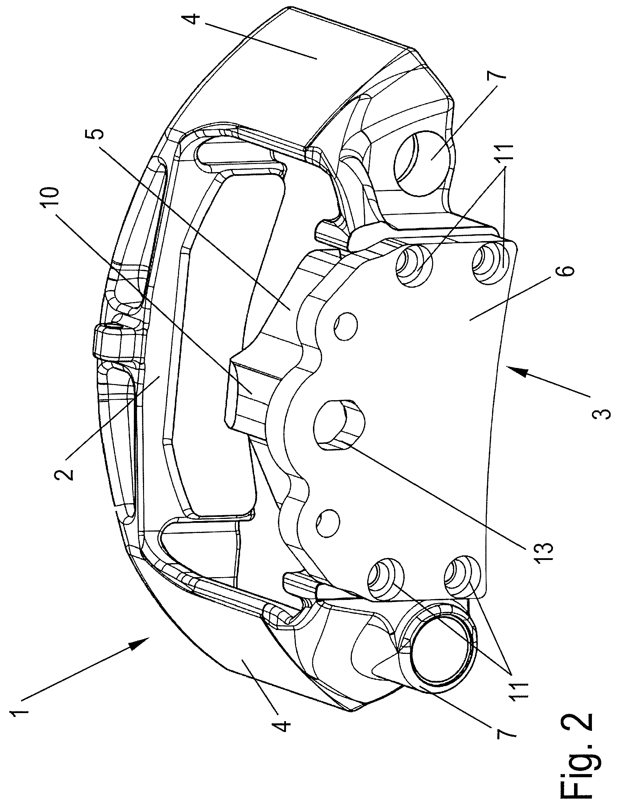

Insbesondere in den Figuren 2 und 3 ist sehr deutlich erkennbar, dass die Befestigungsbohrungen 11 und damit die Verbindungsstellen des Anschlussflansches 6 mit dem Rahmen 1 jeweils mit geringerem Abstand zur einer Mittelachse M der nicht gezeigten Bremsscheibe angeordnet sind als Lagerstellen 7, die Bestandteil des Rahmens 1 sind und die der Aufnahme von Führungsholmen dienen, die mit einem Bremsträger verbunden sind und über die der Bremssattel relativ zur Bremsscheibe verschiebbar ist.

### Bezugszeichenliste

- 1: Rahmen
- 2: Sattelrücken
- 3: Sattelkopf
- 4: Zugstrebe
- 5: Gehäuse
- 6: Anschlussflansch
- 7: Lagerstelle
- 8: Bremsstempel
- 9: Anschraubbohrung
- 10: Hebeldom
- 11: Befestigungsbohrung
- 12: Boden
- 13: Durchgangsöffnung

## Patentansprüche

1. Scheibenbremse für ein Nutzfahrzeug, mit einem eine Bremsscheibe übergreifenden, einen Sattelrücken (2) mit einem Anschlussflansch (6) für einen Bremszylinder aufweisenden Bremssattel, wobei der Sattelrücken (2) und ein Sattelkopf (3) durch zwei parallel und abständig zueinander verlaufende Zugstreben (4) miteinander verbunden sind, und mit einer im Bremssattel positionierten, dem Sattelkopf (3) zugeordneten Zuspanneinrichtung, enthaltend einen schwenkbaren Bremshebel, mindestens einen, bei einer Bremsung an einen Bremsbelag anpressbaren Bremsstempel (8), eine Traverse, in der der Bremsstempel (8) verdrehbar gelagert ist, sowie eine Nachstelleinrichtung zum Ausgleich eines sich verändernden Lüftspiels, **dadurch gekennzeichnet, dass** der Bremssattel aus einem C-förmigen Rahmen (1), einem die Zuspanneinrichtung aufnehmenden, separaten Gehäuse (5) und dem daran befestigten, den Sattelkopf (3) bildenden und mit dem Rahmen (1) direkt verbundenen Anschlussflansch (6) besteht.

2. Scheibenbremse nach Anspruch 1, **dadurch gekennzeichnet, dass** das Gehäuse (5) form-, kraft- und/oder stoffschlüssig mit dem Anschlussflansch (6) verbunden ist.

3. Scheibenbremse nach Anspruch 1 oder 2, **dadurch gekennzeichnet, dass** der Anschlussflansch (6) mit dem Rahmen (1) verschraubt ist oder sich am Rahmen (1) abstützt.

4. Scheibenbremse nach einem der vorhergehenden Ansprüche, wobei der Bremssattel über zwei abständig zueinander angeordnete, in Lagerstellen (7) geführte Führungsholme, bezogen auf die Mittelachse (M) der Bremsscheibe axial verschiebbar gelagert ist, **dadurch gekennzeichnet, dass** die Befestigungsstelle des Anschlussflansches (6) am Rahmen (1) jeweils näher zur Mittelachse (M) angeordnet sind als die benachbarten Lagerstellen (7).

5. Scheibenbremse nach einem der vorhergehenden Ansprüche, **dadurch gekennzeichnet, dass** das Gehäuse (5) einen Hebeldom (10) aufweist, zur freien Verschwenkung des Bremshebels.

6. Scheibenbremse nach einem der vorhergehenden Ansprüche, **dadurch gekennzeichnet, dass** das Gehäuse (5) auf seiner dem Anschlussflansch (6) abgewandten Seite einen Boden (12) aufweist, der von dem Bremsstempel (8) durchtreten ist.

7. Scheibenbremse nach einem der vorhergehenden Ansprüche, **dadurch gekennzeichnet, dass** das Gehäuse (5) als Umformteil, als Gussteil, vorzugsweise aus Leichtmetall oder als Kunststoffteil mit Verstärkungen ausgebildet ist.

8. Scheibenbremse nach einem der vorhergehenden Ansprüche, **dadurch gekennzeichnet, dass** die Baueinheit Gehäuse (5)/Anschlussflansch (6) eine Durchgangsöffnung (13) aufweist, zur Durchführung eines Stößels eines am Anschlussflansch (6) befestigbaren Bremszylinders, wobei der Stößel am Bremshebel angreift.

9. Scheibenbremse nach einem der vorhergehenden Ansprüche, **dadurch gekennzeichnet, dass** der Rahmen (1) aus Gusseisen besteht oder als Schmiede- oder Umformteil ausgebildet ist.

10. Scheibenbremse nach einem der vorhergehenden Ansprüche, **dadurch gekennzeichnet, dass** das Gehäuse (5) und der Anschlussflansch (6) als vormontierte Baueinheit ausgebildet sind.

11. Scheibenbremse nach einem der vorhergehenden Ansprüche, **dadurch gekennzeichnet, dass** der Anschlussflansch (6) ein Widerlager für den Bremshebel bildet.

## Claims

1. Disc brake for a commercial vehicle, comprising a calliper back (2), which encompasses a brake disc and is provided with a mounting flange (6) for a brake calliper having a brake cylinder, wherein the calliper back (2) and a calliper head (3) are joined to one another by two tie bars (4) extending parallel to and at a distance from one another, and further comprising an application device which is positioned in the brake calliper and assigned to the calliper head (3) and which comprises a pivotable brake lever, at least one brake plunger (8) which can be pressed against a brake pad in a braking operation, a crossmember in which the brake plunger (8) is rotatably mounted and an adjusting device for compensating for a changing clearance, **characterised in that** the brake calliper consists of a C-shaped frame (1), a separate housing (5) accommodating the application device and the mounting flange (6), which is secured thereto, forms the calliper head (3) and is directly joined to the frame (1).

2. Disc brake according to claim 1, **characterised in that** the housing (5) is joined to the mounting flange (6) positively, non-positively and/or by adhesive force.

3. Disc brake according to claim 1 or 2, **characterised in that** the mounting flange (6) is bolted to the frame (1) or supported on the frame (1).

4. Disc brake according to any of the preceding claims, wherein the brake calliper is mounted in an axially displaceable manner relative to the central axis (M) of the brake disc by way of two guide bars arranged at a distance from each other and guided in bearing positions (7), **characterised in that** the mounting position of the mounting flange (6) on the frame (1) is in each case closer to the central axis (M) than the adjacent bearing positions (7).

5. Disc brake according to any of the preceding claims, **characterised in that** the housing (5) has a lever dome (10) for the free pivoting of the brake lever.

6. Disc brake according to any of the preceding claims, **characterised in that** the housing (5) has, on the side remote from the mounting flange (6), a base (12), through which the brake plunger (8) passes.

7. Disc brake according to any of the preceding claims, **characterised in that** the housing (5) is designed as a formed part, a cast part, preferably made of a light metal, or a plastic part with reinforcing ribs.

8. Disc brake according to any of the preceding claims, **characterised in that** the assembly of housing (5)/mounting flange (6) has a through-opening (13) for the passage of a lifter of a brake cylinder which can be secured to the mounting flange (6), the lifter acting on the brake lever.

9. Disc brake according to any of the preceding claims, **characterised in that** the frame (1) is made of cast iron or is designed as a forging or a formed part.

10. Disc brake according to any of the preceding claims, **characterised in that** the housing (5) and the mounting flange (6) are designed as a pre-assembled unit.

11. Disc brake according to any of the preceding claims, **characterised in that** the mounting flange (6) forms an abutment for the brake lever.

## Revendications

1. Frein à disque pour un véhicule utilitaire, comprenant un étrier de frein chevauchant un disque de frein et muni d'un dos d'étrier (2) à une bride de raccordement (6) pour un cylindre de freinage, **caractérisé en ce que** ledit dos d'étrier (2) et une tête d'étrier (3) are relié l'un à l'autre par deux bras de tir (4), qui s'étendent en parallèle à un écart l'un de l'autre, et comprenant un dispositif de serrage positionné dans ledit étrier de frein et affecté à ladite tête d'étrier (3), qui enferme un levier de freinage pivotable, au moins un tampon de freinage (8), une traverse, dans laquelle ledit tampon de freinage (8) est monté à rotation, ainsi qu'un moyen de rattrapage afin de compenser un jeu changeant, **caractérisé en ce que** ledit étrier de frein est composé d'un cadre en C (1), une boîte (5) séparée, qui reçoit ledit moyen de serrage, et une bride de raccordement (6) y fixée, qui constitue ladite tête d'étrier et qui est directement raccordée audit cadre (1).

2. Frein à disque selon la revendication 1, **caractérisé en ce que** ladite boîte (5) est raccordée à ladite bride de raccordement (6) par assemblage par forme, par liaison de force et/ou par liaison de matière.

3. Frein à disque selon la revendication 1 ou 2, **caractérisé en ce que** ladite bride de raccordement (6) est vissée audit cadre (1) ou s'appuie audit cadre (1).

4. Frein à disque selon une quelconque des revendications précédentes, dans lequel ledit étrier de frein est monté de façon à se déplacer en sens axial, relativement à l'axe central (M) dudit disque de frein, via deux rails de guidage disposés à un écart l'un de l'autre et guidés dans des points d'appui (7), **caractérisé en ce que** chacun des points de fixation de ladite bride de raccordement (6) audit cadre (1) est disposé plus proche audit axe central (M) que les points d'appui adjacents.

5. Frein à disque selon une quelconque des revendications précédentes, **caractérisé en ce que** ladite boîte (5) comprend un levier à tige (10) pour le pivotement libre du levier de frein.

6. Frein à disque selon une quelconque des revendications précédentes, **caractérisé en ce que** ladite boîte (5) présente un fond (12) de son côté opposé à ladite bride de raccordement, à travers passe lequel ledit tampon de frein (8).

7. Frein à disque selon une quelconque des revendications précédentes, **caractérisé en ce que** ladite boîte (5) est configurée sous forme d'une pièce façonnée, d'une pièce moulée, de préférence en métal léger, ou d'une pièce en matière synthétique à des renforts.

8. Frein à disque selon une quelconque des revendications précédentes, **caractérisé en ce que** le module de construction boîtier (5) / bride de raccordement (6) présente une ouverture de passage (13) pour le passage d'un coulisseau d'un cylindre de freinage apte à être fixé à ladite bride de raccordement (6), audit coulisseau s'engageant audit levier de frein.

9. Frein à disque selon une quelconque des revendications précédentes, **caractérisé en ce que** ledit cadre (1) est fait en fonte ou est configuré sous forme d'une pièce forgée ou façonnée.

10. Frein à disque selon une quelconque des revendications précédentes, **caractérisé en ce que** ladite boîte (5) et ladite bride de raccordement (6) sont configurées sous forme d'un module unitaire pré-assemblée.

11. Frein à disque selon une quelconque des revendications précédentes, **caractérisé en ce que** ladite bride de raccordement (6) constitue une butée pour ledit levier de frein.
